# EUROPEAN PATENT SPECIFICATION

(11) **EP 3 135 963 B1**
(45) Date of publication and mention of the grant of the patent: **29.01.2020**
(21) Application number: 15783127.2
(22) Date of filing: 23.04.2015
(51) Int. Cl.: F16J 15/18, F02F 11/00, F16J 15/26

(54) **OIL SCRAPER RING FOR PISTON ROD, AND STUFFING BOX PROVIDED WITH SAID OIL SCRAPER RING**
ÖLABSTREIFRING FÜR KOLBENSTANGE UND MIT BESAGTEM ÖLABSTREIFRING AUSGESTATTETE STOPFBUCHSE
SEGMENT RACLEUR D'HUILE POUR TIGE DE PISTON, ET PRESSE-ÉTOUPE POURVU DUDIT SEGMENT RACLEUR D'HUILE

(30) Priority: 24.04.2014 JP 2014090008; 24.04.2014 JP 2014090034
(43) Date of publication of application: 01.03.2017
(73) Proprietor: Kabushiki Kaisha Riken, Tokyo 102-8202 (JP)
(72) Inventor: KAKEGAWA Satoru, Kashiwazaki-shi Niigata 945-8555 (JP); KAWANISHI Minoru, Kashiwazaki-shi Niigata 945-8555 (JP)
(74) Representative: SSM Sandmair
(86) International application number: PCT/JP2015/062354
(87) International publication number: WO 2015/163399

(56) References cited:
- EP-A1- 0 139 965
- WO-A1-03/044400
- JP-A- 2008 261 364
- JP-A- 2011 012 758
- JP-U- S5 884 349
- US-A1- 2004 227 301

## Description

### FIELD OF THE INVENTION

The present invention relates to an oil scraper ring for a piston rod, particularly to an oil scraper ring for a piston rod used in large 2-cycle diesel engines, etc. for vessels and a stuffing box comprising such oil scraper rings.

### BACKGROUND OF THE INVENTION

In a large 2-cycle diesel engine for vessels, there is generally a partition between a scavenging room and a crank room, with a piston rod reciprocally moving in a stuffing box containing a seal ring immediately above the partition and an oil-scraper ring. For example, a general stuffing box 400 shown in Fig. 13, which is disclosed in JP 60-18664 A, comprises seal rings 100 and oil scraper rings 110 sealing an outer peripheral surface of a piston rod 300, thereby exhibiting a sealing function of preventing a combustion-residue-containing cylinder oil, which comes from an engine scavenging room, from flowing into a crank room, and an oil-scraping function of scraping a system oil from the piston rod 300 and returning it to the crank room.

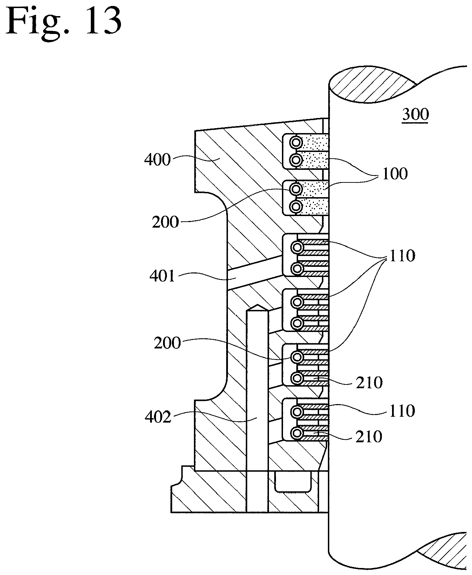

A conventional oil scraper ring 110 as shown in Fig. 13 is constituted by combining three ring bodies each having two rails, with a coil spring 200 arranged on its outer peripheral surface. The conventional oil scraper rings 110 are stacked and attached to an annular groove. With its inner peripheral surface pressed to an outer peripheral surface of a piston rod 300 by a compression force of the coil spring 200, the oil scraper ring 110 scrapes a system oil sticking to a piston rod surface and moving toward the scavenging room side as the piston rod 300 reciprocally moves, thereby preventing the excessive consumption of a system oil. To discharge the scraped system oil more easily, oil drain slots 210 communicating from the inner peripheral surface to the outer peripheral surface are generally provided between two rails.

The uppermost annular groove for the oil scrapers has an oil drain hole 401, through which a mixture of a combustion-residue-containing cylinder oil coming from the engine scavenging room and a system oil not scraped by the oil scraper rings 110 is discharged outside as a drain. The second and lower annular grooves have holes 402 on their outer peripheral surfaces, through which a system oil scraped from the piston rod 300 and collected on the annular groove bottoms via the oil drain slots 210 of the oil scraper rings 110 is returned to the crank room. Because a system oil is generally more expensive than a fuel and a cylinder oil, its consumption largely affecting the operation cost of a vessel, it is strongly desired to reduce the consumption of a system oil by reducing the amount of a drain.

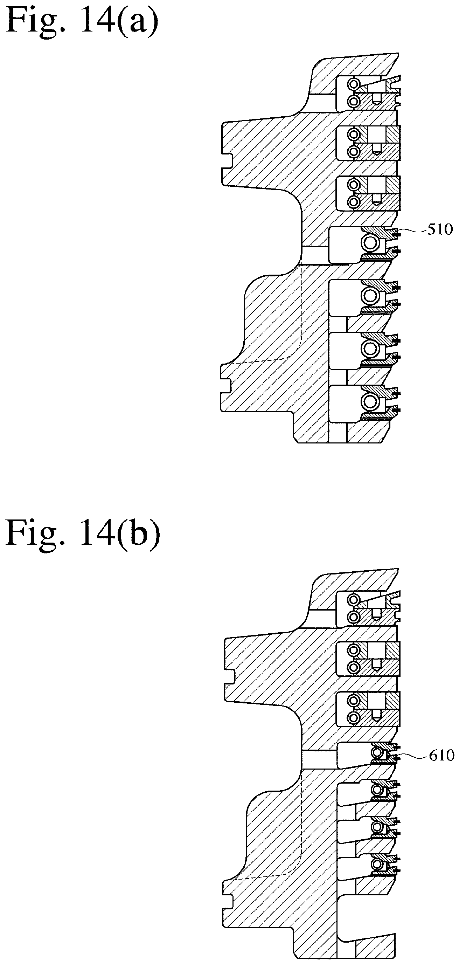

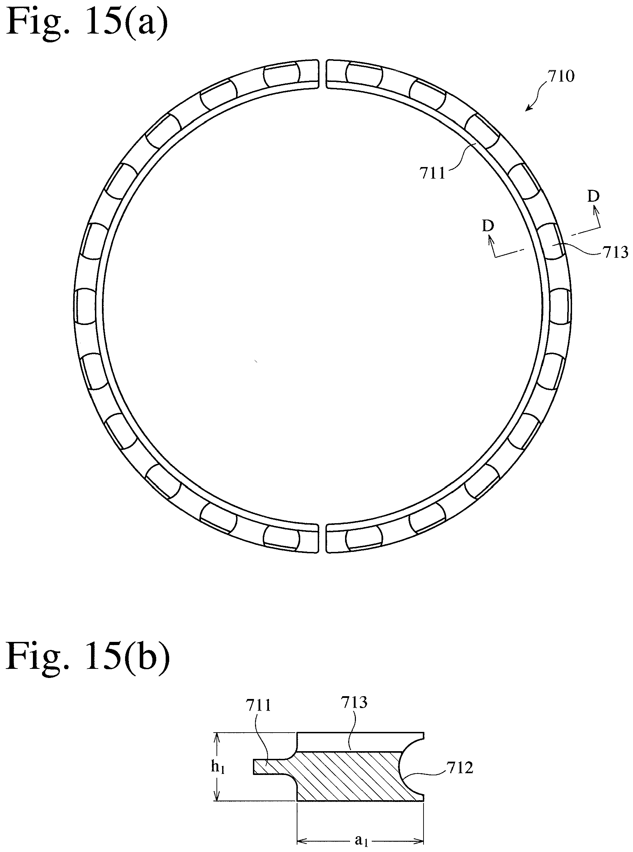

To improve the oil-scraping function of oil scraper rings, various improvements have been conducted so far. As a small, light-weight, flexible structure developed from the conventional oil scraper ring 510 shown in Fig. 14(a) to reduce oil consumption (the amount of drain) and expand a life span, JP 2008-261364 A discloses an oil scraper ring 610 comprising separate rails having an axial width of 5-15 mm and a radial thickness of 17-23 mm in cross section, as shown in Fig. 14(b). To improve followability, JP 2011-12758 A discloses an oil scraper ring constituted by a ring body 710 circumferentially divided to at least two and each having an axial width (h1) of 5-10 mm and a rail-excluding radial thickness (a₁) of 10-20 mm, which comprises a rail 711 at an inner-side longitudinal center, a coil spring groove 712 at an outer-side longitudinal center, and pluralities of oil drain grooves 713 only on one of upper and lower surfaces, as shown in Figs. 15(a) and 15(b).

Though the oil scraper rings of JP 2008-261364 A and JP 2011-12758 A are more effective than previous oil scraper rings in reducing the amount of drain, further reduction of the amount of drain is actually desired.

WO 03/044400 A1 discloses a segmented oil scraping ring in which each segment of the oil scraping ring is formed from a retaining ring segment made of metal with a groove, and an insert ring segment made of plastic with at least one scraping blade inserted in the groove, in order to provide an oil scraping ring in which an oil scraping blade sliding in contact with a piston rod is made of a soft material in order to avoid wear on the piston rod and an associated oil consumption, and in which it is not necessary to replace the whole oil scraping ring when the oil scraping blade is worn down. The retaining ring segment has radially extending cut-out portions on the upper-side surface facing away from a crankcase, to facilitate a flow of scraped oil.

### OBJECT OF THE INVENTION

In view of the above problems, an object of the present invention is to provide an oil scraper ring for a piston rod having better oil-scraping performance than conventional ones, thereby reducing the amount of drain, and a stuffing box comprising such oil scraper rings.

### SUMMARY OF THE INVENTION

As a result of intensive research to improve the followability of the oil scraper ring of JP 2011-12758 A, thereby reducing the amount of drain, the inventors have found that providing an oil scraper ring with inclined oil drain grooves can further reduce the oil consumption, and that the formation of oil drain grooves alternately on both upper and lower surfaces further improves the followability of the oil scraper ring while keeping vertical balance.

Thus, an oil scraper ring for a piston rod according to the present invention comprises
a ring body having a rail coming into sliding contact with an outer peripheral surface of a reciprocally movable piston rod; and
an annular coil spring for pressing the rail to an outer peripheral surface of the piston rod;
the ring body being circumferentially divided to at least two;
the ring body comprising the rail at an inner-side longitudinal center, a groove receiving the coil spring at an outer-side longitudinal center, and pluralities of oil drain grooves vertically alternately on both upper and lower surfaces.

### EFFECTS OF THE INVENTION

With oil drain grooves inclined such that their cross section areas increase as going from the inner side to the outer side, the oil scraper ring for a piston rod according to the present invention can easily discharge an oil from upper-side oil drain grooves. With oil drain grooves alternately formed on both upper and lower surfaces, the moment of inertia of area further decreases while keeping vertical balance, resulting in improved followability, and excellent oil-scraping performance. When oil drain holes are formed on both upper and lower surfaces, rigidity necessary for the oil scraper ring can be kept, by having predetermined inner-side and outer-side distances between upper-side oil drain grooves and adjacent lower-side oil drain grooves in a direction perpendicular to the axis of the ring body. Further, when pluralities of oil scraper rings are stacked and attached to one annular groove, vertically adjacent oil drain grooves of the oil scraper rings can be arranged opposing each other, to have large combined oil drain grooves for easier discharge of an oil.

### BRIEF DESCRIPTION OF THE DRAWINGS

Fig. 1 is a cross-sectional view schematically showing a stuffing box comprising the oil scraper rings for a piston rod according to the present invention.
Fig. 2(a) is a plan view longitudinally showing an example of the oil scraper rings for a piston rod (having oil drain grooves only on an upper surface).
Fig. 2(b) is a front view partially showing the oil scraper ring of Fig. 2(a) for a piston rod radially from outside.
Fig. 2(c) is a cross-sectional view taken along the line A-A in the oil scraper ring for a piston rod shown in Fig. 2(a).
Fig. 3(a) is a plan view longitudinally showing an oil scraper rings for a piston rod according to the present invention (having oil drain grooves on both upper and lower surfaces).
Fig. 3(b) is a front view partially showing the oil scraper ring for a piston rod radially from outside.
Fig. 3(c) is a cross-sectional view taken along the line B-B in the oil scraper ring for a piston rod shown in Fig. 3(a).
Fig. 4(a) is a plan view longitudinally showing a further example of the oil scraper rings for a piston rod according to the present invention (having oil drain grooves on both upper and lower surfaces).
Fig. 4(b) is a front view partially showing the oil scraper ring of Fig. 4(a) for a piston rod radially from outside.
Fig. 4(c) is a cross-sectional view taken along the line C-C in the oil scraper ring for a piston rod shown in Fig. 4(a).
Fig. 5 is a cross-sectional view showing an example of the oil scraper rings for a piston rod according to the present invention, which comprises a pin on the upper surface side.
Fig. 6 is a cross-sectional view showing another example of the oil scraper rings for a piston rod according to the present invention, which comprises a pin on the upper surface side.
Fig. 7 is a cross-sectional view showing an example of the oil scraper rings for a piston rod according to the present invention, which comprises a pin-receiving hole on the lower surface side.
Fig. 8 is a cross-sectional view showing another example of the oil scraper rings for a piston rod according to the present invention, which comprises a pin-receiving hole on the lower surface side.
Fig. 9 is a cross-sectional view showing an example of stuffing boxes comprising three stacked oil scraper rings for a piston rod according to the present invention, which are received in one annular groove.
Fig. 10 is a cross-sectional view showing another example of stuffing boxes comprising three stacked oil scraper rings for a piston rod according to the present invention, which are received in one annular groove.
Fig. 11 is a cross-sectional view showing a further example of stuffing boxes comprising three stacked oil scraper rings for a piston rod according to the present invention, which are received in one annular groove.
Fig. 12 is cross-sectional view showing a still further example of stuffing boxes comprising three stacked oil scraper rings for a piston rod according to the present invention, which are received in one annular groove.
Fig. 13 is a cross-sectional view schematically showing a stuffing box comprising conventional oil scraper rings for a piston rod.
Fig. 14(a) is a cross-sectional view showing another stuffing box comprising conventional oil scraper rings for a piston rod.
Fig. 14(b) is a cross-sectional view showing a stuffing box comprising small, light-weight, soft-structure oil scraper rings, which is disclosed in JP 2008-261364 A.
Fig. 15(a) is a plan view longitudinally showing another conventional oil scraper ring for a piston rod disclosed in JP 2011-12758 A.
Fig. 15(b) is a cross-sectional view taken along the line D-D in the oil scraper ring for a piston rod shown in Fig. 15(a).

### DESCRIPTION OF THE PREFERRED EMBODIMENTS

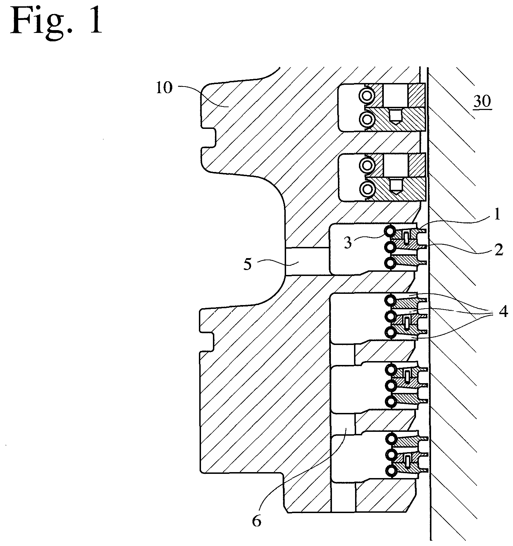

Fig. 1 schematically shows a cross section of a stuffing box 10 comprising oil scraper rings 1 for a piston rod according to an embodiment of the present invention, three oil scraper rings 1 being stacked and received in each annular groove. Each oil scraper ring 1 comprises a rail 2 coming into sliding contact with an outer peripheral surface of a reciprocally movable piston rod 30 at an inner-side longitudinal center, and a groove 7 receiving an annular coil spring 3 for pressing the rail 2 to the outer peripheral surface of the piston rod 30 at an outer-side longitudinal center.

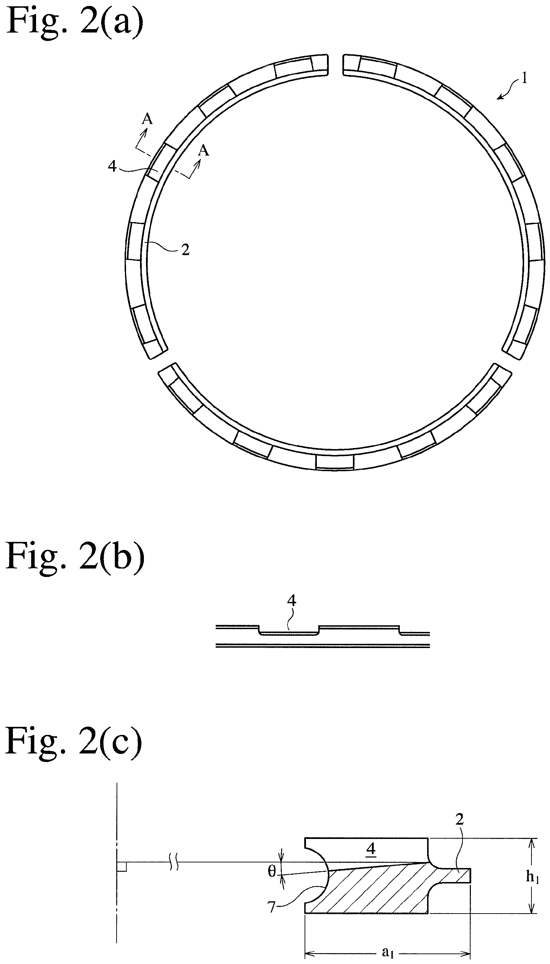

Figs. 2(a) to 2(c) show an embodiment not in accordance with the present invention. Fig. 2(a) is a plan view showing a trisected ring body of the oil scraper ring 1 in a longitudinal direction, and Fig. 2(b) is a partial front view showing a radially outer peripheral surface of the ring, and Fig. 2(c) is a cross-sectional view taken along the line A-A in the ring. The oil scraper ring 1 comprises pluralities of oil drain grooves 4 only on an upper side surface, each oil drain groove 4 being inclined to have an increasing cross section area from the inner peripheral side to the outer peripheral side. With this inclination, a cylinder oil or a system oil entering the oil drain groove 4 easily flows to a bottom of the annular groove. The inclination angle θ of the oil drain grooves 4 is preferably 3-30°, more preferably 5-20°, to a direction perpendicular to the axis of the ring body parallel to the reciprocal movement direction of the piston rod. The inner-side depth of the groove does not reach the rail 2.

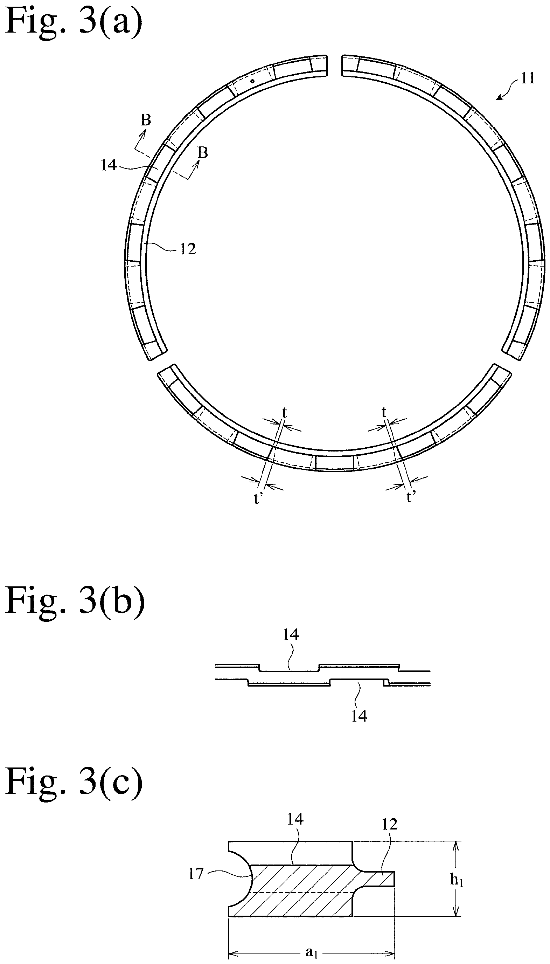

Figs. 3(a) to 3(c) show another embodiment of the present invention. Fig. 3(a) is a plan view showing a ring body of an oil scraper ring 11 in a longitudinal direction, Fig. 3(b) is a partial front view showing a radially outer peripheral surface of the ring, and Fig. 3(c) is a cross-sectional view taken along the line B-B in the ring. The oil scraper ring 11 alternately comprises pluralities of oil drain grooves on both upper and lower sides, and the inner-side depth of the groove does not reach the rail 12. The oil drain grooves 14 alternately formed on both upper and lower surfaces have larger contribution than those formed only on one surface, to improvement in vertical balance and followability due to further decrease in a moment of inertia of area. To keep rigidity necessary for an oil scraper ring while improving the followability, any of the inner-side distance (t) and outer-side distance (t') between an upper-side oil drain groove 14 and an adjacent lower-side oil drain groove 14 in a direction perpendicular to the axis of the ring body, namely, any of the inner-side and outer-side distances of a portion with no oil drain groove on upper and lower surfaces, is preferably 2 mm or more [see Fig. 3(a)]. The distances (t and t') are more preferably 2.5 mm or more, further preferably 3 mm or more.

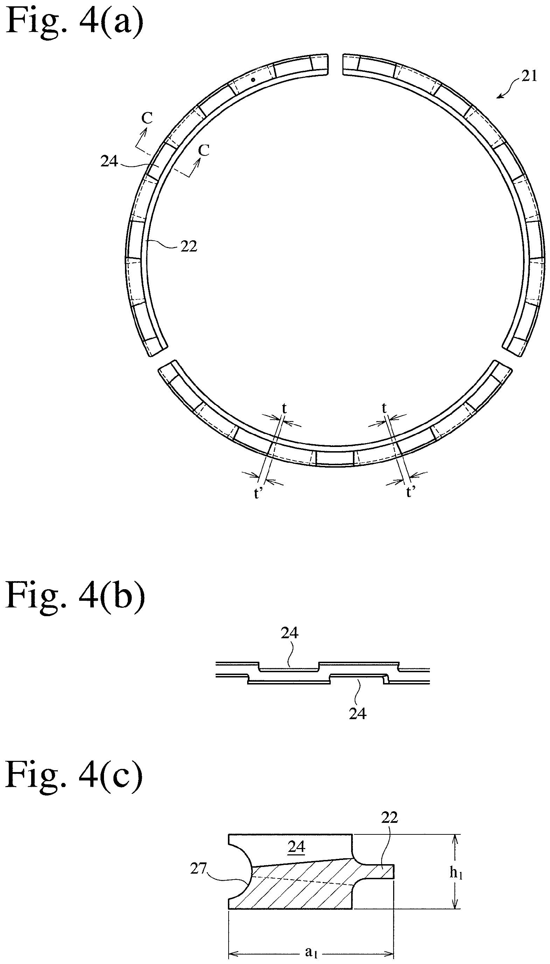

Figs. 4(a) to 4(c) show a further embodiment of the present invention, in which the oil drain grooves in the oil scraper ring shown in Figs. 3(a) to 3(c) are inclined. When oil drain grooves 24 are formed on both upper and lower surfaces, the inclination angle θ of each oil drain groove 24 is preferably 3-10°, more preferably 5-8°, to a direction perpendicular to the axis of the ring body, by relation to the coil spring grooves 27.

The area ratio of an inner-side opening of each oil drain groove 4, 14, 24 is preferably 5-35%, more preferably 7-30%, further preferably 9-27%.

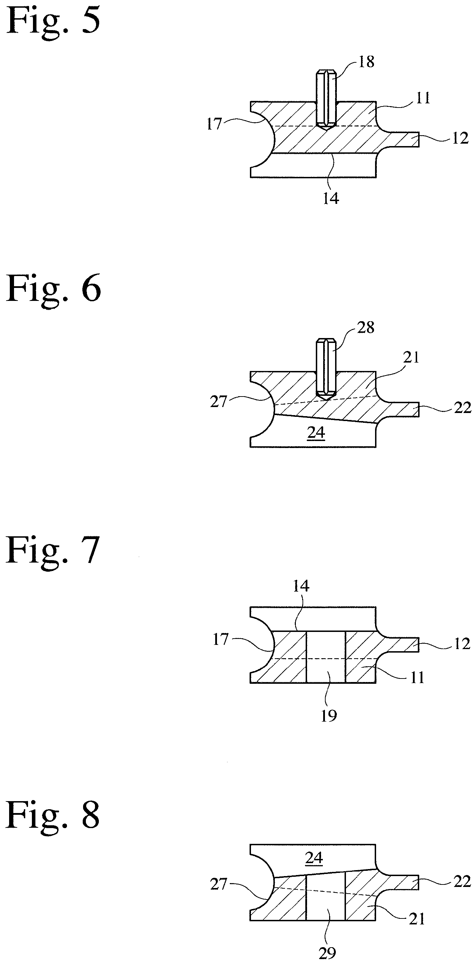

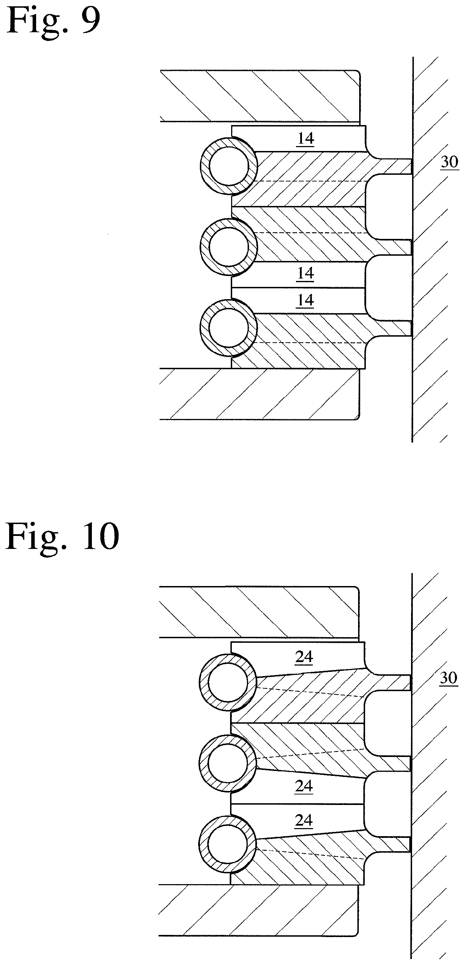

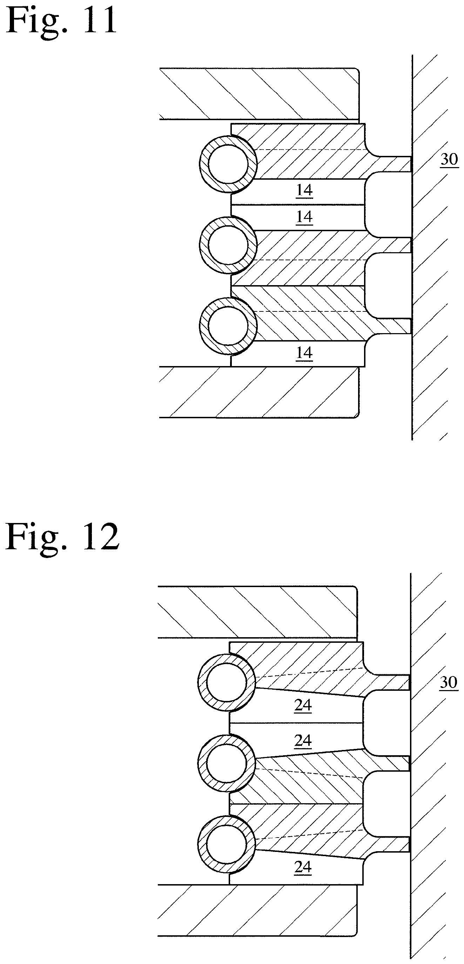

The oil scraper ring 11, 21 for a piston rod according to the present invention preferably has a pin 18, 28 on the upper surface of the ring body as shown in Figs. 5 and 6, which are connected to another adjacent upper oil scraper ring 11, 21 for a piston rod, and a hole 19, 29 on the lower surface of the ring body as shown in Figs. 7 and 8 for receiving a pin 18, 28 of another adjacent lower oil scraper ring 11, 21 for a piston rod. Pluralities of these oil scraper rings 11, 21 for a piston rod are preferably stacked and received in one annular groove of the stuffing box 10, with the oil drain grooves 14, 24 of adjacent oil scraper rings 11, 21 for a piston rod opposing each other. In three stacked oil scraper rings in Figs. 9 and 10, two lower oil scraper rings are arranged with their oil drain grooves 14, 24 opposing, resulting in the combined oil drain grooves having a doubled cross section area (14 + 14, 24 + 24), to make it easy to flow a cylinder oil or a system oil into the oil drain grooves. Figs. 11 and 12 show the cross sections of oil drain grooves adjacent to those shown in Figs. 9 and 10, with two upper oil scraper rings having opposing oil drain grooves 14, 24.

The pin 18, 28 and the pin-receiving hole 19, 29 need only be connected at one site, with the trisected oil scraper rings combined. With clearance in the pin-receiving hole 19, 29, each oil scraper ring can have good followability to the piston rod 30. In general, the oil scraper rings are inclined as the piston rod moves up and down, due to side clearance in the annular grooves. Though an oil scraper ring 110, 510, 610 having two rails as shown in Figs. 13, 14(a) and 14(b) tends to have a gap between one rail and a piston rod by inclination, the oil scraper ring 1, 11, 21 of the present invention unlikely has a gap between the rail 2, 12, 22 and the piston rod 30 even if the oil scraper ring 1, 11, 21 is inclined, because one rail 2, 12, 22 is pressed by one coil spring 3, and because the pin-receiving hole 19, 29 with clearance can flexibly follow the piston rod 30.

### Example 1 (not in accordance with the present invention)

As Example 1, circumferentially trisected oil scraper ring bodies of cast lead bronze (CAC603) each having an inner diameter of 270 mm, an outer diameter of 305 mm, a width (h1) of 7 mm, and a rail-including thickness (a1) of 17.5 mm, which comprised a rail having a width of 1.5 mm and a thickness of 4.5 mm, were produced for a large, low-speed, 6-cylinder, 2-cycle diesel engine having a bore diameter of 700 mm and stroke of 2600 mm. Each ring body was provided with five oil drain grooves each having a width of 22 mm, an inner-side depth of 2.0 mm and an inclination angle of 5° only on the upper surface, so that the entire ring had 15 grooves on the upper surface.

A stuffing box comprised four grooves each receiving two stacked oil scraper rings. Because two stacked oil scraper rings were attached to each groove, a lower oil scraper ring was provided with a pin, and an upper oil scraper ring was provided with a pin-receiving hole, the pin being inserted into the pin-receiving hole. Coil springs of SWPB combined with these oil scraper rings were adjusted to provide a surface pressure of 0.13 MPa.

### Comparative Example 1

As Comparative Example 1, a circumferentially trisected oil scraper ring body of cast lead bronze (CAC603) having an inner diameter of 270 mm, an outer diameter of 305 mm, a width (h1) of 7 mm, and a rail-including thickness (a1) of 17.5 mm, which comprised a rail having a width of 1.5 mm and a thickness of 4.5 mm, was produced in the same manner as in Example 1, except for having a cross section shape of an oil scraper ring 710 shown in Fig. 15(b), with horizontal oil drain grooves having a depth of 2.5 mm.

### [1] Actual engine test 1

To carry out an actual engine test in a tanker equipped with a large, low-speed, 6-cylinder, 2-cycle diesel engine having a bore diameter of 700 mm and a stroke of 2600 mm, stuffing boxes A each having the oil scraper rings of Example 1, and stuffing boxes B each having the oil scraper rings of Comparative Example 1 were provided respectively for six cylinders. The actual engine test was conducted by using the stuffing boxes B for all six cylinders for 1008 hours, and further 1008 hours with the stuffing boxes A changed to the stuffing boxes B. Table 1 shows the amount of drain (L/day) in each cylinder after 24 hours, 504 hours and 1008 hours, respectively, by a relative amount assuming that the amount of drain (L/day) after 24 hours was 1 in the first cylinder of Comparative Example 1.

**Table 1**

| | Amount of Drain | | | | | |
|---|---|---|---|---|---|---|
| | Comparative Example 1 | | | Example 1 | | |
| | 24 hours | 504 hours | 1008 hours | 1032 hours | 1512 hours | 2016 hours |
| First Cylinder | 1 | 1.21 | 1.18 | 0.95 | 0.87 | 0.99 |
| Second Cylinder | 0.89 | 0.93 | 0.95 | 0.90 | 0.85 | 0.88 |
| Third Cylinder | 1.12 | 1.07 | 1.01 | 0.95 | 0.99 | 0.89 |
| Fourth Cylinder | 1.25 | 1.18 | 1.08 | 0.78 | 0.93 | 0.82 |
| Fifth Cylinder | 0.91 | 0.87 | 0.99 | 1.11 | 1.15 | 1.05 |
| Sixth Cylinder | 0.98 | 0.93 | 1.05 | 1.05 | 0.95 | 1.15 |
| Total | 6.15 | 6.19 | 6.26 | 5.74 | 5.84 | 5.78 |

The amount of initial drain (24 hours) in Example 1 was 93.3% of that in Comparative Example 1, indicating 6.7% reduction by using the oil scraper rings. Even when 1008 hours passed, the amount of drain was substantially unchanged.

### Example 2

As Example 2, circumferentially trisected oil scraper ring bodies of cast lead bronze (CAC603) each having an inner diameter of 310 mm, an outer diameter of 345 mm, a width (h1) of 8 mm, and a rail-including thickness (a1) of 17.5 mm, which comprised a rail having a width of 1.5 mm and a thickness 4.5 mm, were produced for large, low-speed, 7-cylinder, 2-cycle diesel engine having a bore diameter of 800 mm and a stroke of 2800 mm. Each ring body was provided with five oil drain grooves on the upper surface and four oil drain grooves on the lower surface alternately, each groove having a width of 30 mm and a depth of 2.5 mm, so that the entire ring had 15 grooves on the upper surface and 12 grooves on the lower surface. With respect to the distance between adjacent oil drain grooves, the inner-side distance (t) was 5.37 mm, and the outer-side distance (t') was 7.64 mm.

A stuffing box comprised four grooves each receiving two stacked oil scraper rings. Because two stacked oil scraper rings were attached to each groove, a lower oil scraper ring was provided with a pin, and an upper oil scraper ring was provided with a pin-receiving hole, the pin being inserted into the pin-receiving hole. With this connection, opposing oil drain grooves of vertically adjacent oil scraper rings were positioned. Coil springs of SWPB combined with these oil scraper rings were adjusted to provide a surface pressure of 0.24 MPa.

### Comparative Example 2

As Comparative Example 2, circumferentially trisected conventional oil scraper ring bodies of cast iron (FC250) each having a shape of an oil scraper ring 510 shown in Fig. 14(a) having an inner diameter of 310 mm, an outer diameter of 358 mm, a width (h1) of 22 mm, and a rail-including thickness (a1) of 26.5 mm, which comprised a rail having a width of 1.5 mm and a thickness of 4.5 mm, were produced. Coil springs of SWPB were adjusted to provide a conventional surface pressure of 0.38 MPa.

### [2] Actual engine test 2

To carry out an actual engine test in a tanker equipped with a large, low-speed, 7-cylinder, 2-cycle diesel engine having a bore diameter of 800 mm and a stroke of 2800 mm, stuffing boxes C each having the oil scraper rings of Example 2, and stuffing boxes D each having the oil scraper rings of Comparative Example 2 were provided respectively for seven cylinders. The actual engine test was conducted by using the stuffing boxes D for all seven cylinders for 1008 hours, and further 1008 hours with the stuffing boxes D changed to the stuffing boxes C. Table 2 shows the amount of drain (L/day) in each cylinder after 24 hours, 504 hours and 1008 hours, respectively, by a relative amount assuming that the amount of drain (L/day) after 24 hours was 1 in the first cylinder of Comparative Example 2.

**Table 2**

| | Amount of Drain | | | | | |
|---|---|---|---|---|---|---|
| | Comparative Example 2 | | | Example 2 | | |
| | 24 hours | 504 hours | 1008 hours | 1032 hours | 1512 hours | 2016 hours |
| First Cylinder | 1 | 1.51 | 1.35 | 0.22 | 0.25 | 0.26 |
| Second Cylinder | 1.35 | 1.25 | 1.55 | 0.25 | 0.27 | 0.22 |
| Third Cylinder | 0.79 | 0.87 | 0.88 | 0.18 | 0.19 | 0.22 |
| Fourth Cylinder | 1.02 | 1.23 | 1.33 | 0.2 | 0.18 | 0.18 |
| Fifth Cylinder | 0.89 | 0.77 | 0.88 | 0.15 | 0.19 | 0.21 |
| Sixth Cylinder | 0.82 | 0.98 | 0.85 | 0.21 | 0.28 | 0.25 |
| Seventh Cylinder | 1.25 | 1.36 | 1.29 | 0.28 | 0.22 | 0.23 |
| Total | 7.12 | 7.97 | 8.13 | 1.49 | 1.58 | 1.56 |

The amount of initial drain (24 hours) in Example 2 was 20.9% of that in Comparative Example 2, indicating drastic reduction of 79.1% by using the oil scraper rings of the present invention. Even when 1008 hours passed, the amount of drain was substantially unchanged.

### Example 3

As Example 3, circumferentially trisected oil scraper ring bodies of cast lead bronze (CAC603) each having an inner diameter of 138 mm, an outer diameter of 165 mm, a width (h1) of 6 mm, and a rail-free thickness (a1) of 9 mm, which comprised a rail having a width of 1.5 mm and a thickness of 4.5 mm, were produced for a large, low-speed, 3-cylinder, 2-cycle diesel engine having a bore diameter of 370 mm and a stroke of 880 mm. Each ring body was provided with five oil drain grooves on the upper surface and four oil drain grooves on the lower surface alternately, each groove having a width of 13 mm, an inner-side depth of 1.5 mm and an inclination angle of 8°, so that the entire ring had 15 grooves on the upper surface and 12 grooves on the lower surface. With respect to the distance between adjacent oil drain grooves, the inner-side distance (t) was 2.38 mm, and the outer-side distance (t') was 3.85 mm.

A stuffing box comprised four grooves each receiving three stacked oil scraper rings. Because three stacked oil scraper rings were attached to each groove, a lower oil scraper ring was provided on the upper surface with a pin inserted into a pin-receiving hole of an intermediate oil scraper ring; an intermediate oil scraper ring was provided with a pin-receiving hole for receiving the pin of the lower oil scraper ring on the lower surface and a pin inserted into a pin-receiving hole of an upper oil scraper ring on the upper surface, and an upper oil scraper ring was provided on the lower surface with a pin-receiving hole for receiving the pin of the intermediate oil scraper ring. With this connection, opposing oil drain grooves of vertically adjacent oil scraper rings were positioned. Coil springs of SWPB combined with these oil scraper rings were adjusted to provide a surface pressure of 0.13 MPa.

### Comparative Example 3

As Comparative Example 3, circumferentially trisected conventional oil scraper ring bodies of cast iron (FC250) each having a shape of a two-rail oil scraper ring 110 shown in Fig. 13 having an inner diameter of 138 mm, an outer diameter of 169 mm, a width (h1) of 9 mm, and a rail-including thickness (a1) of 15.5 mm, which comprised a rail having a width of 1.5 mm and a thickness of 5.0 mm, were produced. Coil springs of SWPB were adjusted to provide a conventional surface pressure of 0.13 MPa.

### [3] Actual engine test 3

To carry out an actual engine test in a vessel equipped with a large, low-speed, 3-cylinder, 2-cycle diesel engine having a bore diameter of 370 mm and a stroke of 880 mm, stuffing boxes E each having the oil scraper rings of Example 3, and stuffing boxes F each having the oil scraper rings of Comparative Example 3 were provided respectively for three cylinders. The actual engine test was conducted by using the stuffing boxes F for all three cylinders for 1008 hours, and further 1008 hours with the stuffing boxes F changed to the stuffing boxes E. Table 3 shows the amount of drain (L/day) in each cylinder after 24 hours, 504 hours and 1008 hours, respectively, by a relative amount assuming that the amount of drain (L/day) after 24 hours was 1 in the first cylinder of Comparative Example 3.

**Table 3**

| | Amount of Drain | | | | | |
|---|---|---|---|---|---|---|
| | Comparative Example 3 | | | Example 3 | | |
| | 24 hours | 504 hours | 1008 hours | 1032 hours | 1512 hours | 2016 hours |
| First Cylinder | 1 | 0.98 | 1.08 | 0.03 | 0.04 | 0.04 |
| Second Cylinder | 0.85 | 0.91 | 0.99 | 0.05 | 0.05 | 0.08 |
| Third Cylinder | 0.93 | 1.05 | 1.11 | 0.01 | 0.02 | 0.04 |
| Total | 2.78 | 2.94 | 3.18 | 0.09 | 0.11 | 0.16 |

The amount of initial drain (24 hours) in Example 3 was 3% of that in Comparative Example 3, indicating remarkable reduction of 97% by using the oil scraper rings of the present invention. Even when 1008 hours passed, the amount of drain was substantially unchanged.

## Claims

1. An oil scraper ring (11, 21) for a piston rod (30) comprising
a ring body having a rail (12, 22) coming into sliding contact with an outer peripheral surface of a reciprocally movable piston rod (30); and
an annular coil spring (3) for pressing said rail (12, 22) to the outer peripheral surface of said piston rod (30);
said ring body being circumferentially divided to at least two;
said ring body comprising said rail (12, 22) at an inner-side longitudinal center, and a groove (17, 27) receiving said coil spring (3) at an outer-side longitudinal center; **characterized in that** said ring body further comprises pluralities of oil drain grooves (14, 24) vertically alternately on both upper and lower surfaces.

2. The oil scraper ring (11, 21) for a piston rod (30) according to Claim 1, wherein said oil drain grooves (14, 24) are inclined such that they expand as going from the inner side to the outer side.

3. The oil scraper ring (11, 21) for a piston rod (30) according to Claim 1, wherein the inclination angle of each oil drain groove (14, 24) is 3 - 10° to a direction perpendicular to the axis of said ring body.

4. The oil scraper ring (11, 21) for a piston rod (30) according to any one of Claims 1 to 3, wherein both of the inner-side distance (t) and the outer-side distance (t') between an upper-side oil drain groove and an adjacent lower-side oil drain groove in a direction perpendicular to the axis of said ring body are 2 mm or more.

5. The oil scraper ring (11, 21) for a piston rod (30) according to any one of Claims 1 to 4, wherein the area ratio of an inner-side opening of each oil drain groove is 5 - 35 %.

6. The oil scraper ring (11, 21) for a piston rod (30) according to any one of Claims 1 to 5, wherein said ring body has a pin (18, 28) on the upper surface, which is connected to an adjacent upper oil scraper ring (11, 21).

7. The oil scraper ring (11, 21) for a piston rod (30) according to any one of Claims 1 to 6, wherein said ring body has a pin-receiving hole (19, 29) on the lower surface, which is connected to an adjacent lower oil scraper ring.

8. A stuffing box comprising pluralities of oil scraper rings (11, 21) according to Claim 6 or 7, which are received in its annular groove.

9. The stuffing box according to Claim 8, comprising a combination of oil scraper rings (11, 21) for a piston rod (30), with the oil drain grooves (14, 24) of adjacent oil scraper rings opposing.

## Patentansprüche

1. Ölabstreifring (11, 21) für eine Kolbenstange (30), umfassend:
einen Ringkörper mit einer Schiene (12, 22), die mit einer äußeren peripheren Oberfläche einer gegenseitig bewegbaren Kolbenstange (30) in Gleitkontakt kommt; und
eine ringförmige Spiralfeder (3) zum Pressen der Schiene (12, 22) an die äußere periphere Oberfläche der Kolbenstange (30);
wobei der Ringkörper umlaufend in mindestens zwei unterteilt ist;
wobei der Ringkörper die Schiene (12, 22) an einer innenseitigen Längsmittellinie und eine Rille (17, 27), die die Spiralfeder (3) aufnimmt, an einer außenseitigen Längsmittellinie umfasst;
**dadurch gekennzeichnet, dass** der Ringkörper ferner Vielzahlen von Ölablaufrillen (14, 24) vertikal abwechselnd auf sowohl oberen als auch unteren Oberflächen umfasst.

2. Ölabstreifring (11, 21) für eine Kolbenstange (30) gemäß Anspruch 1, wobei die Ölablaufrillen (14, 24) geneigt sind, so dass sie sich von der Innenseite zur Außenseite hin aufweiten.

3. Ölabstreifring (11, 21) für eine Kolbenstange (30) gemäß Anspruch 1, wobei der Neigungswinkel von jeder Ölablaufrille (14, 24) 3 - 10° zu einer Richtung senkrecht zur Achse des Ringkörpers beträgt.

4. Ölabstreifring (11, 21) für eine Kolbenstange (30) gemäß einem der Ansprüche 1 bis 3, wobei sowohl der Innenseite-Abstand (t) als auch der Außenseite-Abstand (t') zwischen einer obere Seite-Ölablaufrille und einer benachbarten untere Seite-Ölablaufrille in einer Richtung senkrecht zur Achse des Ringkörpers 2 mm oder mehr betragen.

5. Ölabstreifring (11, 21) für eine Kolbenstange (30) gemäß einem der Ansprüche 1 bis 4, wobei das Flächenverhältnis einer innenseitigen Öffnung von jeder Ölablaufrille 5 - 35 % beträgt.

6. Ölabstreifring (11, 21) für eine Kolbenstange (30) gemäß einem der Ansprüche 1 bis 5, wobei der Ringkörper einen Stift (18, 28) auf der oberen Oberfläche, die mit einem benachbarten oberen Ölabstreifring (11, 21) verbunden ist, aufweist.

7. Ölabstreifring (11, 21) für eine Kolbenstange (30) gemäß einem der Ansprüche 1 bis 6, wobei der Ringkörper ein Stift-aufnehmendes Loch (19, 29) auf der unteren Oberfläche, die mit einem benachbarten unteren Ölabstreifring verbunden ist, aufweist.

8. Stopfbuchse, umfassend Vielzahlen von Ölabstreifringen (11, 21) gemäß Anspruch 6 oder 7, die in ihrer ringförmigen Rille aufgenommen werden.

9. Stopfbuchse gemäß Anspruch 8, umfassend eine Kombination von Ölabstreifringen (11, 21) für eine Kolbenstange (30), wobei sich die Ölablaufrillen (14, 24) von benachbarten Ölabstreifringen gegenüberliegen.

## Revendications

1. Segment racleur d'huile (11, 21) pour une tige de piston (30) comportant
un corps annulaire comportant un rail (12, 22) entrant en contact glissant avec une surface périphérique extérieure d'une tige de piston (30) mobile en mouvement alternatif ; et
un ressort hélicoïdal annulaire (3) pour presser ledit rail (12, 22) contre la surface périphérique extérieure de ladite tige de piston (30) ;
ledit corps annulaire étant divisé circonférentiellement en au moins deux ;
ledit corps annulaire comportant ledit rail (12, 22) en un centre longitudinal côté intérieur, et une rainure (17, 27) recevant ledit ressort hélicoïdal (3) en un centre longitudinal côté extérieur ; **caractérisé en ce que** ledit corps annulaire comporte en outre plusieurs rainures de drainage d'huile (14, 24) en alternance verticale sur les surfaces supérieure et inférieure.

2. Segment racleur d'huile (11, 21) pour une tige de piston (30) selon la revendication 1, dans lequel lesdites rainures de vidange d'huile (14, 24) sont inclinées de telle sorte qu'elles s'étendent du côté intérieur vers le côté extérieur.

3. Segment racleur d'huile (11, 21) pour une tige de piston (30) selon la revendication 1, dans lequel l'angle d'inclinaison de chaque rainure de vidange d'huile (14, 24) est de 3 - 10 ° par rapport à une direction perpendiculaire à l'axe dudit corps annulaire.

4. Segment racleur d'huile (11, 21) pour une tige de piston (30) selon l'une quelconque des revendications 1 à 3, dans lequel la distance intérieure (t) et la distance extérieure (t') entre une rainure de vidange d'huile supérieure et une rainure de vidange d'huile inférieure adjacente dans une direction perpendiculaire à l'axe dudit corps annulaire sont toutes deux de 2 mm ou plus.

5. Segment racleur d'huile (11, 21) pour une tige de piston (30) selon l'une quelconque des revendications 1 à 4, dans lequel le rapport de surface d'une ouverture côté intérieur de chaque rainure de vidange d'huile est de 5 à 35 %.

6. Segment racleur d'huile (11, 21) pour une tige de piston (30) selon l'une quelconque des revendications 1 à 5, dans lequel ledit corps d'annulaire présente une tige (18, 28) sur la surface supérieure, qui est reliée à un segment racleur d'huile supérieur adjacent (11, 21).

7. Segment racleur d'huile (11, 21) pour une tige de piston (30) selon l'une quelconque des revendications 1 à 6, dans lequel ledit corps d'annulaire présente un trou de réception de tige (19, 29) sur la surface supérieure, qui est reliée à un segment racleur d'huile supérieur adjacent (11, 21).

8. Presse-étoupe comportant plusieurs segments racleurs d'huile (11, 21) selon la revendication 6 ou 7, qui sont reçus dans sa rainure annulaire.

9. Presse-étoupe selon la revendication 8, comportant une combinaison de segments racleurs d'huile (11, 21) pour une tige de piston (30), les rainures de vidange d'huile (14, 24) de segments racleurs d'huile adjacents étant opposées.
